# EUROPÄISCHE PATENTSCHRIFT

(11) **EP 3 201 248 B1**
(45) Veröffentlichungstag und Bekanntmachung des Hinweises auf die Patenterteilung: **07.11.2018**
(21) Anmeldenummer: 15766091.1
(22) Anmeldetag: 10.09.2015
(51) Int. Cl.: C08F 220/28, C08F 220/44, D01F 9/22

(54) **SCHMELZSPINNBARE COPOLYMERE VOM POLYACRYLNITRIL, VERFAHREN ZUR HERSTELLUNG VON FASERN ODER FASERPRECURSOREN MITTELS SCHMELZSPINNEN UND ENTSPRECHEND HERGESTELLTE FASERN**
MELT SPINNABLE COPOLYMERS OF POLYACRYLONITRILE, METHOD FOR PRODUCING FIBERS OR THREIR PRECURSORS BY MEANS OF MELT SPINNING AND CORRESPONDINGLY PRODUCED FIBRES
COPOLYMÈRES FILABLES FUSIBLES DE POLYACRYLONITRILE, PROCÉDÉ DE FABRICATION DE FIBRES AU MOYEN DE FILAGE PAR FUSION ET FIBRES PRODUITES CORRESPONDANTE

(30) Priorität: 29.09.2014 DE 102014219707
(43) Veröffentlichungstag der Anmeldung: 09.08.2017
(73) Patentinhaber: Fraunhofer-Gesellschaft zur Förderung der angewandten Forschung e.V., 80686 München (DE)
(72) Erfinder: HAHN, Mathias, 14552 Michendorf (DE); LIESKE, Antje, 14480 Potsdam (DE); KNOOP, Mats, 21244 Buchholz in der Nordheide (DE)
(74) Vertreter: Pfenning, Meinig & Partner mbB
(86) Internationale Anmeldenummer: PCT/EP2015/070769
(87) Internationale Veröffentlichungsnummer: WO 2016/050478

(56) Entgegenhaltungen:
- WO-A1-00/50675
- DE-A1- 2 042 358
- US-A- 6 114 034

## Beschreibung

Die Erfindung betrifft schmelzspinnbare Copolymere vom Polyacrylnitril (PAN), die durch eine Copolymerisation von Acrylnitril mit einem Alkoxyalkylacrylat herstellbar sind. Als zusätzliche Comonomere kommen Alkylacrylate und Vinylester infrage. Ebenso betrifft die Erfindung ein Verfahren zur Herstellung von Fasern oder Faserprecursoren, insbesondere Carbonfaserprecursoren, mittels Schmelzspinnen, bei dem das besagte Copolymer eingesetzt wird. Weiterhin betrifft die Erfindung derart hergestellte Fasern, insbesondere Carbonfasern.

Die im Bereich der technischen Fasern immer höhere Bedeutung gewinnenden Carbonfasern werden gemäß Stand der Technik durch thermische Konvertierung von separat hergestellten Precursor-Fasern hergestellt. Materialien für die Precursor-Fasern sind vor allem PAN-(Co)Polymere (Acryl-Precursor) sowie Pech. Acryl-Precursorfasern werden kommerziell bisher ausschließlich über Nass- bzw. Trockenspinnverfahren hergestellt. Dazu wird eine Lösung der Polymere mit Konzentrationen ≤ 20% entweder in ein Koagulationsbad oder eine heiße Dampfatmosphäre gesponnen, wobei das Lösungsmittel aus der Faser diffundiert. Auf diese Weise werden qualitativ hochwertige Precursoren erzeugt, die Kosten der Verfahren sind jedoch vergleichsweise hoch. Dies resultiert einerseits aus den benötigten Lösemitteln und deren Handling, andererseits aus dem relativ geringen Durchsatz bei Lösungsspinnverfahren.

Aufgrund der starken inter- und intramolekularen Wechselwirkungen der Nitrilgruppen liegt der Schmelzpunkt von PAN mit 320°C oberhalb der Zersetzungstemperatur des Polymers. Dies bedeutet, dass ein Schmelzspinnen von reinem PAN nicht möglich ist, das Polymer verhält sich nicht wie ein Thermoplast sondern wie ein Duroplast. Gleichzeitig würde jedoch die Möglichkeit zur Herstellung von Precursorfasern mittels Schmelzspinnen eine deutliche Kostenersparnis in der Precursorherstellung bedeuten, da der Durchsatz beim Schmelzspinnen wesentlich höher ist und zudem keine Lösungsmittel anfallen, die Kosten für Beschaffung und Recycling/Entsorgung verursachen.

Seit mehreren Jahrzehnten gibt es daher Bestrebungen, PAN der Verarbeitung mittels Schmelzspinnen zugänglich zu machen. Prinzipiell zu unterscheiden sind dabei Ansätze über eine äußere Weichmachung (Mischung des Polymers mit Zusätzen) und über eine innere Weichmachung (Copolymerisation). In beiden Fällen wird dabei die Wechselwirkung der Nitrilgruppen gestört, so dass das Schmelzen unterhalb der Zersetzungstemperatur des Polymers erfolgt.

Wesentliche Voraussetzung für die Weiterverarbeitung zu Carbonfasern ist die Möglichkeit, die Fasern anschließend oxidativ zu stabilisieren. Dieser Prozess wird bei Temperaturen oberhalb 200°C durchgeführt und resultiert in der Bildung cyclischer Strukturen, die erst die anschließende Carbonisierung ermöglichen. Dies kann selbstverständlich nur dann gelingen, wenn die Fasern bei den Stabilisierungstemperaturen nicht schmelzen - was, da die Stabilisierungstemperaturen im Allgemeinen höher als die Verarbeitungstemperaturen beim Schmelzspinnen liegen, ein zusätzlich zu lösendes Problem darstellt.

Eine innere Weichmachung wird durch die Copolymerisation mit geeigneten Comonomeren erreicht. Bereits 1970 wurde in GB1270504 die Herstellung thermoplastischer Acrylnitril-Copolymere für eine Faserherstellung mittels Schmelzspinnen bei 200 bis 240°C beschrieben. Als Anwendungsbereich werden Textilfasern adressiert. Dabei werden 8-50wt% aliphatischer/ alicyclischer Alkene und/oder Acrylate als Comonomere eingesetzt, wobei in den Anwendungsbeispielen Methyl-, Ethyl-, Butylacrylat, Isobuten, Vinylacetat und Propen aufgeführt sind. Zusätzlich enthalten die Copolymere 0,2-10wt% sulfonsäuregruppenhaltiger Monomere. Solche säuregruppenhaltigen Copolymere sind jedoch nicht für ein kontinuierliches Schmelzspinnverfahren geeignet, da die Schmelzviskosität nicht stabil ist sondern im Laufe der Zeit aufgrund der durch die Säuregruppen katalysierten Cyclisierungsreaktion der Nitrilgruppen unweigerlich zunimmt.

In US 3499073 wird die Herstellung von thermoplastischen PAN-Copolymeren mit Hilfe eines Organometall-Katalysators beschrieben. Die Polymere - auch Homopolymere des PAN - konnten bei Temperaturen von 250°C bis 295°C zu Monofilamenten verarbeitet werden.

Die GB1294044 beschreibt Acrylnitrilcopolymere, die 60-70% Acrylnitril, 25-30% Methacrylnitril und 5-10% Acrylate oder Methacrylate enthalten und Erweichungspunkte zwischen 125°C und 175°C aufweisen. Am beschriebenen Erweichungspunkt liegt das Polymer jedoch nicht als Schmelze sondern als flexibilisierter Film vor.

In US4107252 werden Copolymere des Acrylnitril mit 12-18wt% Styrol und 13-18wt% Isobuten vorgestellt, die Schmelztemperaturen zwischen 175°C und 260°C aufweisen. Die Comonomergehalte sind jedoch viel zu hoch, um aus solchen Copolymeren Carbonfasern herstellen zu können. Allgemein wird davon ausgegangen, dass ein für Carbonfasern geeignetes PAN-Copolymer eine durchschnittliche Kettenlänge von ≥9 aufeinanderfolgender Acrylnitrileinheiten enthalten muss. Es können also realistischerweise nur ca. 10mol% Comonomergehalt toleriert werden.

In EP0030666 werden thermoplastische Acrylnitrilcopolymere mit bis zu 96% Acrylnitrilgehalt für Schläuche und Folien beschrieben, die durch Pfropfung von Acrylnitril auf eine Elastomerphase entstehen. Solche Polymere weisen aufgrund der Pfropfung verzweigte Strukturen auf und sind nicht für die Faserherstellung geeignet.

Die GB 2356830 beschreibt die thermoplastische Verformung von Acrylnitrilpolymeren mit 96-100% Acrylnitrilgehalt durch ein spezielles Druck-und Temperaturregime, der Autor schließt jedoch die Möglichkeit zum Einsatz für das Schmelzspinnen aufgrund der nötigen hohen Extruderdrücke aus.

Die US5618901 beschreibt einen Prozess zur Herstellung eines thermoplastischen Acrylnitril-Copolymers, bestehend aus 50-95% Acrylnitril und 5-50% eines Comonomers, wobei zunächst alle denkbaren Comonomerklassen (Acrylate, Methacrylate, Acrylamide, Methacrylamide, Acrylamidderivate, Methacrylamidderivate, Vinylester, Vinylether, Vinylamide, Vinylketone, Styrol, halogenhaltige Monomere, ionische Monomere, säuregruppenhaltige Monomere, aminogruppenhaltige Monomere, Olefine und Kombinationen) abgedeckt werden. Die Ausführungsbeispiele geben Methylstyrol, Styrol, Vinylacetat, Methylacrylat und Methylmethacrylat mit mindestens 15wt% Anteil (entspricht für Methylacrylat ca. 10mol%) am Copolymer an. Die Copolymere konnten bei 200°C extrudiert werden.

Die US 6114034 beschreibt die Herstellung von Fasern aus eben diesen Copolymeren, wobei in den Ausführungsbeispielen ausschließlich Methylacrylat und Vinylacetat als Comonomere Verwendung finden, und zwar in einem Anteil von 15-25wt%. Es konnten Fasern hergestellt werden mit Durchmessern von 3-8 dtex und Festigkeiten bis zu 29cN/tex (15% Methylacrylat) bzw. 55cN/tex (25% Methylacrylat), die Spinntemperaturen lagen abhängig von der Molmasse zwischen 210°C (55.000g/mol) und 240°C (90.000g/mol). Eigene Arbeiten zeigen jedoch, dass derartige Copolymere keine stabile Schmelzeviskosität aufweisen. Ein Copolymer mit 10mol% MA und einer Molmasse von 126.000g/mol zeigte nach 20min bei 200°C einen Anstieg der komplexen Viskosität um 35%, ein Copolymer mit 20mol% Methylacrylat und einer Molmasse von 68.000g/mol immer noch einen von 10%. Verfolgt man die komplexe Viskosität über die Temperatur, so findet man für das o.g. Copolymer mit 10mol% Methylacrylat einen Abfall der komplexen Viskosität mit der Temperatur bis zu einer Temperatur von 220°C, bei höheren Temperaturen steigt die Temperatur aufgrund einsetzender Zersetzungs- und Stabilisierungsprozesse wieder an. Eine solche Instabilität ist mit einem technischen Schmelzspinnprozess nicht zu vereinbaren. Sie führt zu Vercrackungen an Hot-Spots im Spinnextruder, der Spinnpumpe und der Spinndüse und zu Fehlstellen in der gesponnenen Faser. Ein schmelzspinnbarer PAN-Precursor soll maximal 11mol% Comonomer aufweisen, bei Temperaturen von max. 220°C verarbeitbar sein und gleichzeitig eine stabile Schmelzeviskosität bis mindestens 240°C aufweisen, um Temperaturspitzen durch mechanische Belastungen in Spinnextruder und Spinnpumpe tolerieren zu können.

In WO 00/50675 wird die Nutzung der oben beschriebenen Copolymere zur Herstellung von Carbonfaser-Precursoren patentiert. Inhaltlich geht das Patent jedoch nicht über US6114034 hinaus. Als präferierte Comonomere werden Methylacrylat, Ethylacrylat, Methylmethacrylat und Vinylacetat angegeben.

Auch die DE 20 42 358 beschreibt Copolymere aus Acrylnitril zur Herstellung von Kohlenstofffasern. Allerdings werden hier ausschließlich Hydroxymethylacrylverbindungen als Comonomere verwendet und die Copolymere weisen dadurch eine erhebliche Anzahl an Hydroxylgruppen auf.

Ausgehend hiervon war es Aufgabe der vorliegenden Erfindung, Precursoren auf Basis von Polyacrylnitril bereitzustellen, die eine verbesserte Eignung für Schmelzspinnprozesse zeigen.

Diese Aufgabe wird durch das Copolymer mit den Merkmalen des Anspruchs 1 und das Verfahren zur Herstellung von Fasern mittels Schmelzspinnen mit den Merkmalen des Anspruchs 11 sowie durch die Faser mit den Merkmalen des Anspruchs 15 gelöst. Die weiteren abhängigen Ansprüche zeigen vorteilhafte Weiterbildungen auf.

Erfindungsgemäß wird ein schmelzspinnbares Copolymer von Polyacrylnitril (PAN) bereitgestellt, das durch eine Copolymerisation von 95 bis 80 mol-% Acrylnitril mit mindestens einem Comonomer ausgewählt aus
a) 5 bis 20 mol-% mindestens eines Alkoxyalkylacrylats der allgemeinen Formel I, 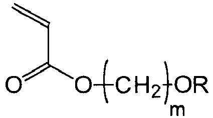 mit
   R = CnH2n+1 und n = 1-8 und m = 1-8, insbesondere n=1-4 und m=1-4
b) 0 bis 10 mol-% mindestens eines Alkylacrylats der allgemeinen Formel II 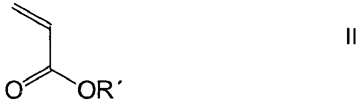 mit
   R = CnH2n+1 und n = 1-18,
c) 0 bis 10 mol-% mindestens eines Vinylesters der allgemeinen Formel III 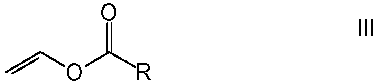 mit
   R = CnH2n+1 und n = 1-18,
herstellbar ist. Das Copolymer besitzt dabei eine gewichtsmittlere molare Masse (Mw) im Bereich von 10.000 bis 150.000 g/mol.

Vorzugsweise ist das Copolymer im Temperaturbereich von 160 bis 240°C, insbesondere von 180 bis 220°C verspinnbar.

Das erfindungsgemäße Copolymer weist vorzugsweise eine mit steigender Temperatur bis 240°C, insbesondere bis 260°C konstante oder sinkende Schmelzviskosität auf. Dies belegt, dass das erfindungsgemäße Copolymer eine besonders hohe Stabilität der Schmelzeviskosität aufweist.

Vorzugsweise wird die Copolymerisation durch eine Fällungspolymerisation, eine Emulsionspolymerisation und/oder eine Polymerisation in einem Lösungsmittel durchgeführt. Das Lösungsmittel ist dabei vorzugsweise ausgewählt aus der Gruppe bestehend aus Dimethylsulfoxid, Dimethylformamid, Dimethylacetamid, N-Methylpyrrolidon, Ethylencarbonat, Propylencarbonat, wässrige Natriumrhodanid-Lösung und Mischungen hiervon.

Der Anteil des mindestens einen Alkoxyalkylacrylats beträgt vorzugsweise 8 bis 12 mol-%.

Eine weitere bevorzugte Ausführungsform sieht vor, dass ein Gemisch von Comonomeren mindestens eines Alkoxyalkylacrylats und mindestens eines Alkylacrylats vorliegt. Der Anteil des mindestens einen Alkylacrylats kann dabei vorzugsweise im Bereich von 1 bis 5 mol-% liegen.

Eine weitere bevorzugte Ausführungsform sieht vor, dass ein Gemisch aus mindestens einem Alkoxyalkylacrylat und mindestens einem Vinylester vorliegt. Der Anteil des mindestens einen Vinylesters liegt dabei vorzugsweise im Bereich von 1 bis 5 mol-%. Es ist weiter bevorzugt, dass das Copolymer eine gewichtsmittlere molare Masse (Mw) im Bereich von 15.000 bis 80.000 g/mol aufweist.

Ebenso ist es auch möglich, dass als Comonomere Alkoxyalkylacrylate in Verbindung mit Alkylacrylaten und Vinylestern eingesetzt werden.

Erfindungsgemäß wird ebenso ein Verfahren zur Herstellung von Fasern oder Faserprecursoren mittels Schmelzspinnen bereitgestellt, bei dem
i. eine Copolymerisation von 95 bis 80 mol-% Acrylnitril mit mindestens einem Comonomer ausgewählt aus
   a) 5 bis 20 mol-% mindestens eines Alkoxyalkylacrylats der allgemeinen Formel I, 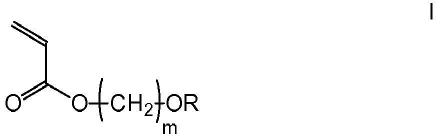 mit
      R = CnH2n+1 und n = 1-8 und m = 1-8, insbesondere n=1-4 und m=1-4
   b) 0 bis 10 mol-% mindestens eines Alkylacrylats der allgemeinen Formel II 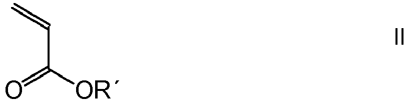 mit
      R = CnH2n+1 und n = 1-18,
   c) 0 bis 10 mol-% mindestens eines Vinylester der allgemeinen Formel III 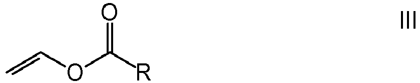 mit
      R = CnH2n+1 und n = 1-18,
      in Gegenwart mindestens eines Initiators durchgeführt wird,
ii. das Copolymer mit einem Extruder mit mindestens einer für das Verspinnen geeigneten Düse am Extruderausgang zu Mono- oder Multi-Filamenten versponnen wird.

Dabei ist es möglich, dass unmittelbar vor oder bei der Extrusion in b) mindestens ein Weichmacher zugesetzt wird, der insbesondere ausgewählt ist aus der Gruppe bestehend aus Wasser, Nitroalkanen, Alkylalkoholen, ionischen Flüssigkeiten, Glykolen, Dimethylsulfoxid, Dimethylformamid, Dimethylacetamid, N-Methylpyrrolidon, Ethylencarbonat, Propylencarbonat, wässrige Natriumrhodanid-Lösung und Mischungen hiervon. Sofern ein Weichmacher zugesetzt wird, kann der Spinndüse eine Druckkammer nachgeschaltet werden, um ein explosionsartiges Verdampfen von unter Verarbeitungstemperaturen siedenden Weichmachern zu verhindern.

Für den Fall, dass sich bei den Fasern um Carbonfasern handelt, werden vorzugsweise die beiden folgenden sich anschließenden Schritte durchgeführt:
i. eine Stabilisierung der Filamente durch eine Temperaturbehandlung bei Temperaturen von 200 bis 350 °C und
ii. eine Carbonisierung der Filamente bei Temperaturen von 800 bis 1200 °C.

Die Stabilisierung der Filamente erfolgt vorzugsweise bei Temperaturen von 180 bis 320°C, bevorzugt von 180 bis 300°C, besonders bevorzugt von 180 bis 250°C.

Es ist weiter bevorzugt, dass bei der Copolymerisation im Schritt (i.) als Initiator der radikalischen Polymerisation ausgewählt ist aus der Gruppe bestehend aus Azoverbindungen, Peroxiden, Hydroperoxiden, Alkylperoxiden, Peroxodicarbonaten, Peroxyestern, Dialkylperoxiden, Persulfaten, Perphosphaten, Redoxinitiatoren und Mischungen hiervon.

Erfindungsgemäß werden ebenso Fasern, insbesondere Carbonfasern bereitgestellt, die nach dem zuvor beschriebenen Verfahren herstellbar sind.

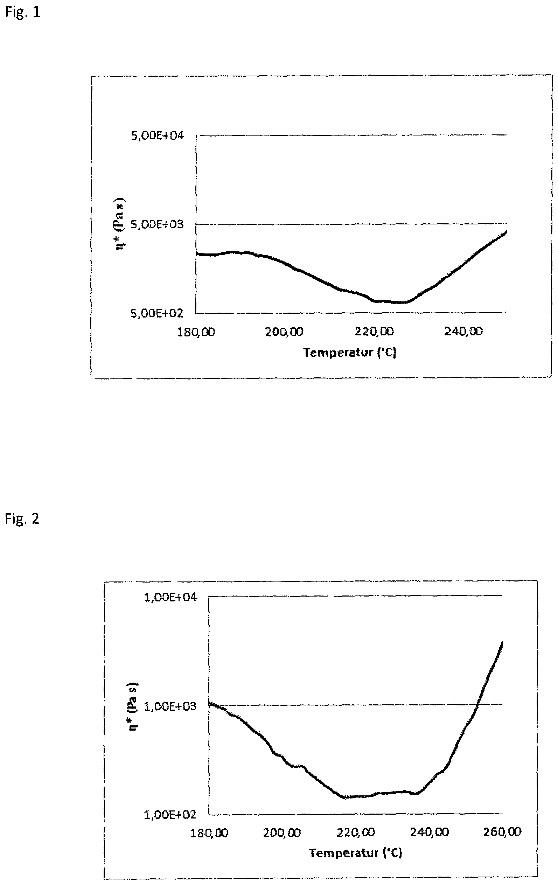

Anhand der nachfolgenden Beispiele und Figuren soll der erfindungsgemäße Gegenstand mehr erläutert werden, ohne diesen auf die hier gezeigten spezifischen Ausführungsformen einschränken zu wollen. Die Figuren 1 bis 11 zeigen anhand von Diagrammen die Temperaturabhängigkeit der Viskosität für die im Folgenden aufgeführten Beispiele.

### Beispiele

### In den Beispielen wurde folgende Vorrichtungen eingesetzt:

Mini-Haake: Es handelt sich um einen Mini-2-Schneckenextruder "HAAKE Minilab", Thermo Electron Corporation, Germany. An der Schmelzaustritts-öffnung wurde eine 1-Loch-Düse mit einem Lochdurchmesser von 500 µm angebracht. Die Dosierung erfolgte händisch. Das austretende Monofilament wurde mit einem Spulkopf (max. 400 m/min) ausgezogen und auf eine Spule gewickelt.

Versuchsanlage Multi-Filament-Spinnen (Spinntester): Der Aufbau beinhaltet einen 2-Schneckenextruder (L/D = 30) mit 4 Temperaturzonen. Die Dosierung erfolgte gravimetrisch unter Stickstoffatmosphäre , wobei der Einzug auf max. 40°C temperiert wurde. Am Ende des Extruders war das Spinnpaket mit Schmelzefilter (100µm) sowie der Düsenplatte (42-Lochdüse, Lochdurchmesser 400 µm, L/D = 4) montiert. Als Abzugsorgan diente eine Galettenduo, welches mit einer Geschwindigkeit von bis zu 100 m/min abziehen konnte. Die finale Wicklung des Filamentgarns wurde durch einen Kreuzspulwickler realisiert.

### Vergleichsbeispiel 1

### Fällungspolymerisation zu Copolymer mit 10mol% Methylacrylat und Verspinnen auf Mini-Haake

In einem Doppelmantelreaktor mit Rückflusskühlung und Ankerrührer werden unter Stickstoffspülung 340g Wasser, 0,39g Ascorbinsäure und 0,2g Mercaptoethanol vorgelegt. Ein Gemisch aus 6,1g Methylacrylat und 33,9g Acrylnitril wird zugegeben. Es wird auf 30°C Reaktorinnentemperatur aufgeheizt, 200µl einer 1%igen Lösung von Eisen(II)sulfat-Heptahydrat zugegeben und anschließend eine Lösung von 0,45g Ammoniumpersulfat in 10g Wasser zugesetzt. Nach 1,5h wird die Reaktion beendet, der Reaktorinhalt filtriert, mit Wasser und Ethanol gewaschen und im Vakuum getrocknet.

Das resultierende Polymer weist eine relative Viskosität von 2,0 auf. Die Zusammensetzung entsprach mit 9,7mol% Methylacrylat und 90,3mol% Acrylnitril nahezu den feed-Werten.

Die rheologische Messung im Oszillationsmodus (Temperatursweep) ist in Fig. 1 dargestellt.

Es ist ein Anstieg der komplexen Viskosität bei Temperaturen oberhalb 220°C zu verzeichnen.

Das Polymer wurde im Mini-Haake bei 230°C mit einer maximalen Abzugsgeschwindigkeit von 40m/min zu einem Monofilament versponnen. Höhere Abzugsgeschwindigkeiten konnten nicht realisiert werden. Ein über längere Zeit stabiler Spinnprozess war nicht möglich.

### Vergleichsbeispiel 2

Lösungspolymerisation zu Copolymer mit 10mol% Methylacrylat und Verspinnen auf Mini-Haake

In einem 250ml-Rundkolben mit Rückflusskühler und Stickstoffeinleitung werden unter Magnetrührung 72g N-Methylpyrrolidon vorgelegt. Es wird eine Mischung aus 7,4g Methylacrylat und 40,6g Acrylnitril zugegeben und mit einem Ölbad auf 60°C aufgeheizt. Eine Lösung von 180mg V-65 (2,2'Azobis(2,4-Dimethylvaleronitril), Fa. Wako) in 2ml Aceton wird nach Erreichen der Temperatur zugegeben. Die Reaktionszeit beträgt 6h. Das Reaktionsgemisch wird in 500ml Ethanol gefällt, das Polymer abfiltriert, mit Ethanol gewaschen und im Vakuum getrocknet.

Das resultierende Polymer weist eine relative Viskosität von 1,5 auf. Die Molmasse Mw wurde zu 29.000g/mol mit einem PDI von 1,5 bestimmt. Die Zusammensetzung entsprach mit 9,3mol% Methylacrylat und 90,7mol% Acrylnitril nahezu den feed-Werten.

Die rheologische Messung im Oszillationsmodus (Temperatursweep) ist in Fig. 2 dargestellt.

Es ist ein Anstieg der komplexen Viskosität bei Temperaturen oberhalb 230°C zu verzeichnen.

Das Polymer wurde im Mini-Haake bei 220°C mit einer maximalen Abzugsgeschwindigkeit von 200m/min zu einem Monofilament versponnen. Ein über längere Zeit stabiler Spinnprozess war nicht möglich.

### Beispiel 1

Fällungspolymerisation zu Copolymer mit 10% Methoxyethylacrylat (m=2; n=1) und Verspinnen auf Mini-Haake

In einem Doppelmantelreaktor mit Rückflusskühlung und Ankerrührer werden unter Stickstoffspülung 340g Wasser, 0,39g Ascorbinsäure und 1,0g Mercaptoethanol vorgelegt. Ein Gemisch aus 8,6g Methoxyethylacrylat und 31,4g Acrylnitril wird zugegeben. Es wird auf 30°C Reaktorinnentemperatur aufgeheizt, 200µl einer 1%igen Lösung von Eisen(II)sulfat-Heptahydrat zugegeben und anschließend eine Lösung von 0,45g Ammoniumpersulfat in 10g Wasser zugesetzt. Nach 1,5h wird die Reaktion beendet, der Reaktorinhalt filtriert, mit Wasser und Ethanol gewaschen und im Vakuum getrocknet.

Das resultierende Polymer weist eine relative Viskosität von 1,4 auf. Die Molmasse Mw wurde zu 22.000g/mol mit einem PDI von 2,3 bestimmt. Die Zusammensetzung entsprach mit 10,2mol% Methoxyethylacrylat und 89,8mol% Acrylnitril nahezu den feed-Werten.

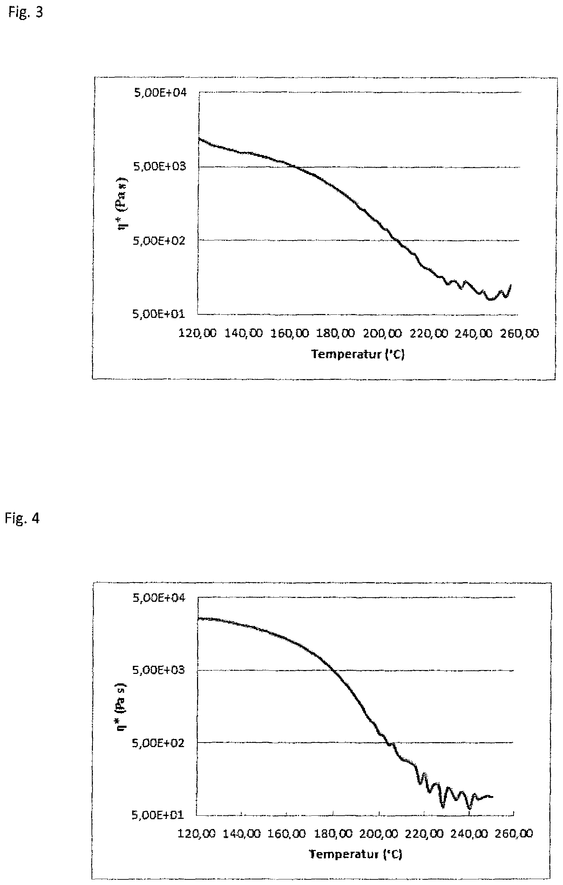

Die rheologische Messung im Oszillationsmodus (Temperatursweep) ist in Fig. 3 dargestellt.

Es ist kein Wiederanstieg der komplexen Viskosität bis zu Temperaturen von mindestens 255°C zu verzeichnen.

Das Polymer wurde im Mini-Haake bei 180°C mit einer maximalen Abzugsgeschwindigkeit von 200m/min zu einem Monofilament versponnen. Der Titer der Faser betrug 2,8tex, die Festigkeit 16,4cN/tex, die Bruchdehnung 16,4%.

### Beispiel 2

### Lösungspolymerisation zu Copolymer mit 10% Methoxyethylacrylat und Verspinnen auf Mini-Haake

In einem 250ml-Rundkolben mit Rückflusskühler und Stickstoffeinleitung werden unter Magnetrührung 80g Dimethylsulfoxid vorgelegt. Es wird eine Mischung aus 4,3g Methoxyethylacrylat, 15,7g Acrylnitril und 500mg Mercaptoethanol zugegeben und mit einem Ölbad auf 60°C aufgeheizt. Eine Lösung von 250mg V-65 (2,2'Azobis(2,4-Dimethylvaleronitril), Fa. Wako) in 1ml Aceton wird nach Erreichen der Temperatur zugegeben. Die Reaktionszeit beträgt 6h. Das Reaktionsgemisch wird in 500ml Ethanol gefällt, das Polymer abfiltriert, mit Ethanol gewaschen und im Vakuum getrocknet.

Das resultierende Polymer weist eine relative Viskosität von 1,4 auf. Die Zusammensetzung entsprach mit 9,7mol% Methoxyethylacrylat und 90,3mol% Acrylnitril nahezu den feed-Werten.

Das Polymer wurde im Mini-Haake bei 180°C mit einer maximalen Abzugsgeschwindigkeit von 400m/min zu einem Monofilament versponnen. Der Titer der Faser betrug 1,0tex, die Festigkeit 11,5cN/tex, die Bruchdehnung 19,0%.

### Beispiel 3

### Lösungspolymerisation zu Copolymer mit 10% Methoxyethylacrylat und Verspinnen auf Mini-Haake

In einem 100ml-Rundkolben mit Rückflusskühler und Stickstoffeinleitung werden unter Magnetrührung 36g N-Methyl-2-pyrrolidon (NMP) vorgelegt. Es wird eine Mischung aus 5,15g Methoxyethylacrylat, 18,85g Acrylnitril zugegeben und mit einem Ölbad auf 60°C aufgeheizt. Eine Lösung von 98mg V-65 (2,2'Azobis(2,4-Dimethylvaleronitril), Fa. Wako) in 0,5ml Aceton wird nach Erreichen der Temperatur zugegeben. Die Reaktionszeit beträgt 6h. Das Reaktionsgemisch wird in 500ml Wasser gefällt, das Polymer abfiltriert, mit Ethanol gewaschen und im Vakuum getrocknet.

Das resultierende Polymer weist eine relative Viskosität von 1,6 auf. Die Molmasse Mw wurde zu 44.000g/mol mit einem PDI von 1,4 bestimmt. Die Zusammensetzung entsprach mit 9,6mol% Methoxyethylacrylat und 90,4mol% Acrylnitril nahezu den feed-Werten.

Die rheologische Messung im Oszillationsmodus (Temperatursweep) ist in Fig. 4 dargestellt.

Es ist kein Wiederanstieg der komplexen Viskosität bis zu Temperaturen von mindestens 250°C zu verzeichnen.

Das Polymer wurde im Mini-Haake bei 180°C mit einer maximalen Abzugsgeschwindigkeit von 118m/min zu einem Monofilament versponnen. Der Titer der Faser betrug 4,3tex, die Festigkeit 18,3cN/tex, die Bruchdehnung 16,5%.

### Beispiel 4

### Lösungspolymerisation zu Copolymer mit 10% Butoxyethylacrylat (m=2, n=4) und Verspinnen auf Mini-Haake

In einem 100ml-Rundkolben mit Rückflusskühler und Stickstoffeinleitung werden unter Magnetrührung 36g N-Methyl-2-pyrrolidon (NMP) vorgelegt. Es wird eine Mischung aus 6,4g Butoxyethylacrylat und 17,6g Acrylnitril zugegeben und mit einem Ölbad auf 60°C aufgeheizt. Eine Lösung von 92mg V-65 (2,2'Azobis(2,4-Dimethylvaleronitril), Fa. Wako) in 0,5ml Aceton wird nach Erreichen der Temperatur zugegeben. Die Reaktionszeit beträgt 6h. Das Reaktionsgemisch wird in 500ml Wasser gefällt, das Polymer abfiltriert, mit Ethanol gewaschen und im Vakuum getrocknet.

Das resultierende Polymer weist eine relative Viskosität von 1,6 auf. Die Zusammensetzung entsprach mit 9,7mol% Butoxyethylacrylat und 90,3mol% Acrylnitril nahezu den feed-Werten.

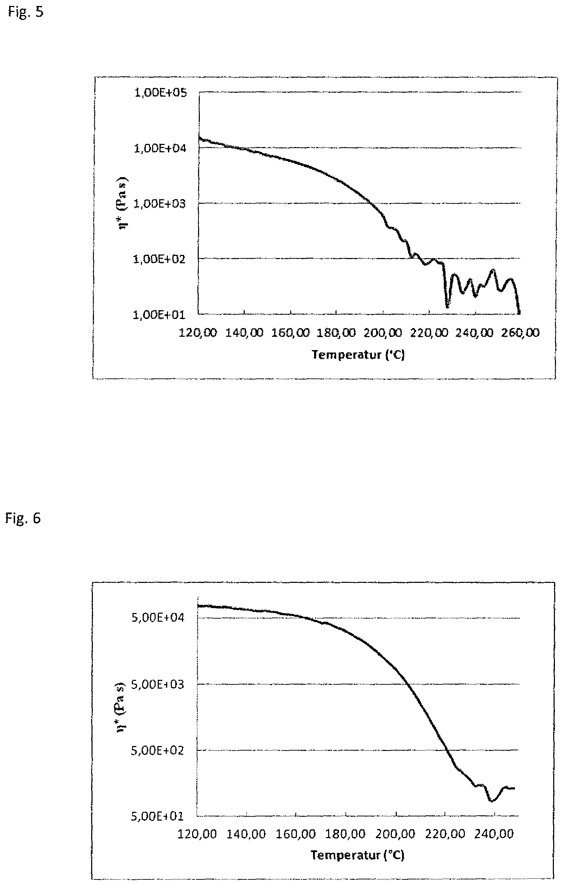

Die rheologische Messung im Oszillationsmodus (Temperatursweep) ist in Fig. 5 dargestellt.

Es ist kein Wiederanstieg der komplexen Viskosität bis zu Temperaturen von mindestens 250°C zu verzeichnen.

Das Polymer wurde im Mini-Haake bei 200°C mit einer maximalen Abzugsgeschwindigkeit von 98m/min zu einem Monofilament versponnen. Der Titer der Faser betrug 8tex, die Festigkeit 9,5cN/tex, die Bruchdehnung 14,2%.

### Beispiel 5

### Lösungspolymerisation zu Copolymer mit 7,5% Methoxyethylacrylat und Verspinnen auf Mini-Haake

Es werden in einem 1.8L Edelstahlreaktor 222,0g N-Methyl-2-pyrrolidon (NMP), 123,4g Acrylnitril und 24,6g 2-Methoxyethylacrylat vorgelegt und mittels eines Einleitrohres für 15 min mit Stickstoff inertisiert. Der verschlossene Reaktor wird daraufhin auf 55°C erwärmt und mittels einer Spritze, eine Lösung von 615mg V-40 (1,1'-Azobis(cyclohexancarbonitril), Fa. Wako) in 8 mL NMP über einen Einlass injiziert. Das Reaktionsgemisch wird dann für 6h bei 90°C gerührt.

Das Gemisch wird nach der Reaktion in 2L NMP aufgenommen und in der 5-fachen Menge Wasser gefällt. Nach der Filtration des Polymers wird dieses mit Wasser und Ethanol gewaschen und bei 60°C im Vakuum getrocknet.

Das resultierende Polymer weist eine relative Viskosität von 1,4 auf. Die Molmasse Mw wurde zu 38.000g/mol mit einem PDI von 1,2 bestimmt. Die Zusammensetzung entsprach mit 7,1mol% Methylacrylat und 92,9mol% Acrylnitril nahezu den feed-Werten.

Die rheologische Messung im Oszillationsmodus (Temperatursweep) ist in Fig. 6 dargestellt.

Es ist kein Wiederanstieg der komplexen Viskosität bis zu Temperaturen von mindestens 250°C zu verzeichnen.

Das Polymer wurde im Mini-Haake bei 200°C mit einer maximalen Abzugsgeschwindigkeit von 98m/min zu einem Monofilament versponnen. Der Titer der Faser betrug 7,3tex, die Festigkeit 7,7cN/tex, die Bruchdehnung 16,8%.

### Beispiel 6

### Lösungspolymerisation zu Copolymer mit 10% Methoxyethylacrylat und Verspinnen auf Spinntester

Es werden in einem 7.5L Edelstahlreaktor 3000g N-Methyl-2-pyrrolidon (NMP), 1630g Acrylnitril und 449g 2-Methoxyethylacrylat vorgelegt und mittels eines Einleitrohres für 15 min mit Stickstoff inertisiert. Der verschlossene Reaktor wird daraufhin auf 55°C erwärmt und mittels einer Spritze, eine Lösung von 8,8g V-40 (1,1'-Azobis(cyclohexancarbonitril), Fa. Wako) in 100mL NMP über einen Einlass injiziert. Das Reaktionsgemisch wird dann für 6h bei 90°C gerührt.

Das Gemisch wird nach der Reaktion in der 5-fachen Menge Wasser gefällt. Nach der Filtration des Polymers wird dieses mit Wasser und Ethanol gewaschen und bei 60°C im Vakuum getrocknet.

Das resultierende Polymer weist eine relative Viskosität von 1,3 auf. Die Zusammensetzung entsprach mit 9,7mol% Methylacrylat und 90,3mol% Acrylnitril nahezu den feed-Werten.

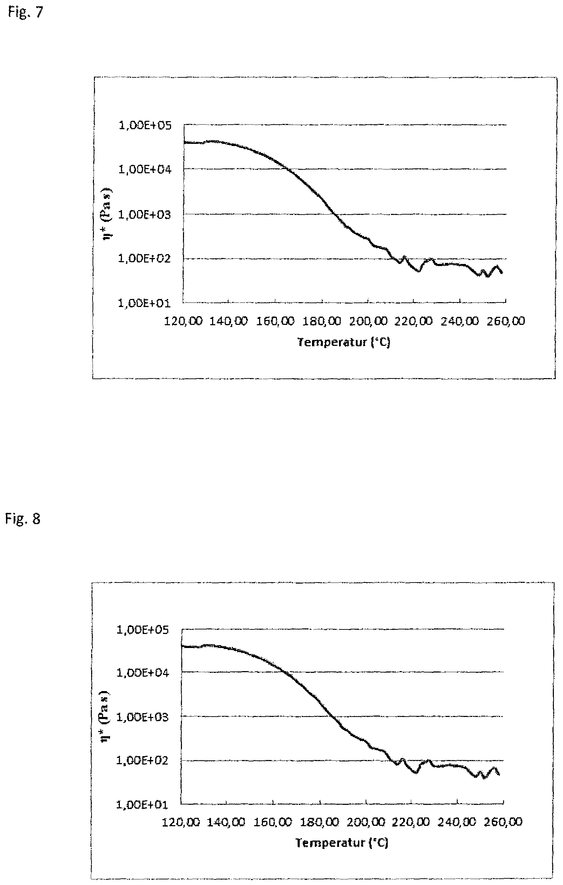

Die rheologische Messung im Oszillationsmodus (Temperatursweep) ist in Fig. 7 dargestellt.

Es ist kein Wiederanstieg der komplexen Viskosität bis zu Temperaturen von mindestens 250°C zu verzeichnen.

Das Polymer wurde im Spinntester unter folgenden Bedingungen versponnen: Temperaturzonen im Extruder 110°C/160°C/180°C/180°C; Spinndüsentemperatur 180°C; maximale Abzugsgeschwindigkeit von 100m/min. Der Titer der Einzelfaser betrug 0,82tex, die Festigkeit 16,3cN/tex, die Bruchdehnung 17,6%.

Bei einer Abzugsgeschwindigkeit von 40m/min wurde ein Einzelfasertiter von 2,1tex erhalten, die Festigkeit betrug 10,1cN/tex, die Bruchdehnung 53,6%. Diese Faser wurde in 80°C heißem Wasser nachverstreckt. Der dabei erhaltene Einzelfasertiter betrug 0,80tex, die Festigkeit 22,4cN/tex, die Bruchdehnung 19,0%.

### Beispiel 7

### Lösungspolymerisation zu Copolymer mit 10% Methoxyethylacrylat und Verspinnen auf Spinntester

Es werden in einem 1.8L Stahlreaktor 499,5g N-Methyl-2-pyrrolidon (NMP), 166,5g DMSO, 348,8g Acrylnitril und 95,1g 2-Methoxyethylacrylat vorgelegt und mittels eines Einleitrohres für 15 min mit Stickstoff inertisiert. Der verschlossene Reaktor wird daraufhin auf 55°C erwärmt und mittels einer Spritze, eine Lösung von 1,79g V-40 (1,1'-Azobis(cyclohexancarbonitril), Fa. Wako) in 25 mL NMP über einen Einlass injiziert. Das Reaktionsgemisch wird dann für 6h bei 90°C gerührt.

Das Gemisch wird nach der Reaktion in 2L NMP aufgenommen und in der 5-fachen Menge Wasser gefällt. Nach der Filtration des Polymers wird dieses mit Wasser und Ethanol gewaschen und bei 60°C im Vakuum getrocknet.

Das resultierende Polymer weist eine relative Viskosität von 1,6 auf. Die Zusammensetzung entsprach mit 10,1mol% Methylacrylat und 89,9mol% Acrylnitril nahezu den feed-Werten.

Das Polymer wurde im Spinntester unter folgenden Bedingungen versponnen: Temperaturzonen im Extruder 110°C/160°C/185°C/200°C; Spinndüsentemperatur 200°C; maximale Abzugsgeschwindigkeit von 30m/min. Der Titer der Einzelfaser betrug 0,92tex, die Festigkeit 20,3cN/tex, die Bruchdehnung 20,9%.

### Beispiel 8

### Lösungspolymerisation zu Copolymer mit 9% Methoxyethylacrylat und 1% Dodecylacrylat sowie Verspinnen auf Mini-Haake

Es werden in einem 1L Stahlreaktor 222,0g N-Methyl-2-pyrrolidon (NMP), 114,2g Acrylnitril und 28,0g 2-Methoxyethylacrylat und 5,75g Dodecylacrylat vorgelegt und mittels eines Einleitrohres für 15 min mit Stickstoff inertisiert. Der verschlossene Reaktor wird daraufhin auf 55°C erwärmt und mittels einer Spritze, eine Lösung von 583mg V-40 (1,1'-Azobis(cyclohexancarbonitril), Fa. Wako) in 8 mL NMP über einen Einlass injiziert. Das Reaktionsgemisch wird dann für 6h bei 90°C gerührt.

Das Gemisch wird nach der Reaktion in 1L NMP aufgenommen und in der 5-fachen Menge Wasser gefällt. Nach der Filtration des Polymers wird dieses mit Wasser und Ethanol gewaschen und bei 60°C im Vakuum getrocknet.

Das resultierende Polymer weist eine relative Viskosität von 1,4 auf. Die Zusammensetzung entsprach mit 8,8mol% Methoxyethylacrylat, 1,0% Dodecylacrylat und 90,2mol% Acrylnitril nahezu den feed-Werten.

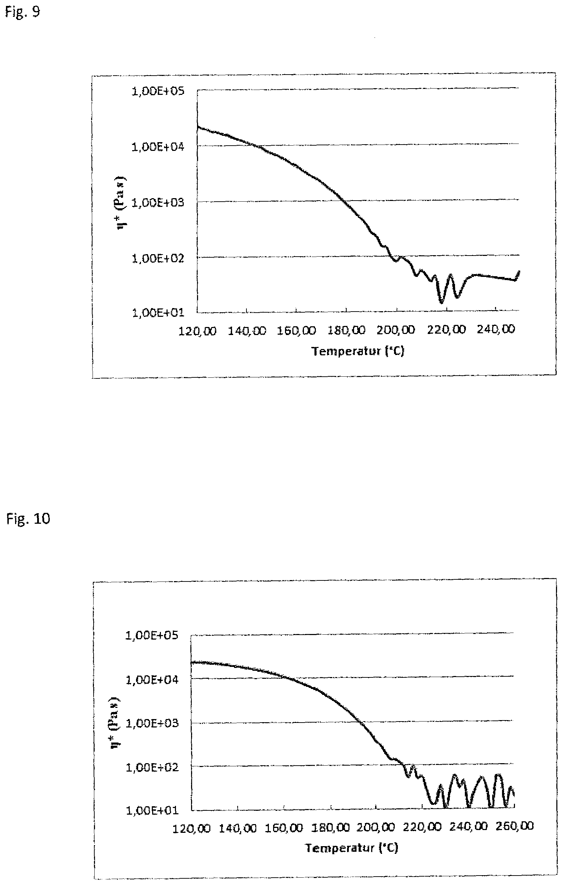

Die rheologische Messung im Oszillationsmodus (Temperatursweep) ist in Fig. 9 dargestellt.

Es ist kein Anstieg der komplexen Viskosität bei Temperaturen oberhalb 230°C zu verzeichnen.

Das Polymer wurde im Mini-Haake bei 200°C mit einer maximalen Abzugsgeschwindigkeit von 400m/min zu einem Monofilament versponnen. Der Titer der Faser betrug 3,8tex, die Festigkeit 7,5cN/tex, die Bruchdehnung 107,5%.

### Beispiel 9

### Lösungspolymerisation zu Copolymer mit 8% Methoxyethylacrylat und 2% Dodecylacrylat sowie Verspinnen auf Mini-Haake

Es werden in einem 1L Stahlreaktor 222,0g N-Methyl-2-pyrrolidon (NMP), 112,2g Acrylnitril und 24,5g 2-Methoxyethylacrylat und 11,3g Dodecylacrylat vorgelegt und mittels eines Einleitrohres für 15 min mit Stickstoff inertisiert. Der verschlossene Reaktor wird daraufhin auf 55°C erwärmt und mittels einer Spritze, eine Lösung von 575mg V-40 (1,1'-Azobis(cyclohexancarbonitril), Fa. Wako) in 8 mL NMP über einen Einlass injiziert. Das Reaktionsgemisch wird dann für 6h bei 90°C gerührt.

Das Gemisch wird nach der Reaktion in 1L NMP aufgenommen und in der 5-fachen Menge Wasser gefällt. Nach der Filtration des Polymers wird dieses mit Wasser und Ethanol gewaschen und bei 60°C im Vakuum getrocknet.

Das resultierende Polymer weist eine relative Viskosität von 1,4 auf. Die Zusammensetzung entsprach mit 7,9mol% Methoxyethylacrylat, 1,9% Dodecylacrylat und 90,2mol% Acrylnitril nahezu den feed-Werten.

Die rheologische Messung im Oszillationsmodus (Temperatursweep) ist in Fig. 9 dargestellt.

Es ist kein Anstieg der komplexen Viskosität bei Temperaturen oberhalb 230°C zu verzeichnen.

Das Polymer wurde im Mini-Haake bei 200°C mit einer maximalen Abzugsgeschwindigkeit von 400m/min zu einem Monofilament versponnen. Der Titer der Faser betrug 2,5tex, die Festigkeit 9,1cN/tex, die Bruchdehnung 76,2%.

### Beispiel 10

### Lösungspolymerisation zu Copolymer mit 7% Methoxyethylacrylat und 3% Dodecylacrylat sowie Verspinnen auf Mini-Haake

Es werden in einem 1L Stahlreaktor 222,0g N-Methyl-2-pyrrolidon (NMP), 110,3g Acrylnitril und 21,0g 2-Methoxyethylacrylat und 16,6g Dodecylacrylat vorgelegt und mittels eines Einleitrohres für 15 min mit Stickstoff inertisiert. Der verschlossene Reaktor wird daraufhin auf 55°C erwärmt und mittels einer Spritze, eine Lösung von 565mg V-40 (1,1'-Azobis(cyclohexancarbonitril), Fa. Wako) in 8 mL NMP über einen Einlass injiziert. Das Reaktionsgemisch wird dann für 6h bei 90°C gerührt.

Das Gemisch wird nach der Reaktion in 1L NMP aufgenommen und in der 5-fachen Menge Wasser gefällt. Nach der Filtration des Polymers wird dieses mit Wasser und Ethanol gewaschen und bei 60°C im Vakuum getrocknet.

Das resultierende Polymer weist eine relative Viskosität von 1,4 auf. Die Zusammensetzung entsprach mit 6,8mol% Methoxyethylacrylat, 3,0% Dodecylacrylat und 90,2mol% Acrylnitril nahezu den feed-Werten.

Die rheologische Messung im Oszillationsmodus (Temperatursweep) ist in Fig. 10 dargestellt.

Es ist kein Anstieg der komplexen Viskosität bei Temperaturen oberhalb 230°C zu verzeichnen.

Das Polymer wurde im Mini-Haake bei 200°C mit einer maximalen Abzugsgeschwindigkeit von 400m/min zu einem Monofilament versponnen. Der Titer der Faser betrug 2,3tex, die Festigkeit 10,7cN/tex, die Bruchdehnung 29,7%.

### Beispiel 11

### Lösungspolymerisation zu Copolymer mit 5% Methoxyethylacrylat und 5% Methylacrylat sowie Verspinnen auf Mini-Haake

In einem 100ml-Rundkolben mit Rückflusskühler und Stickstoffeinleitung werden unter Magnetrührung 36g N-Methylpyrrolidon vorgelegt. Es wird eine Mischung aus 1,8g Methylacrylat, 2,7g Methoxyethylacrylat und 19,6g Acrylnitril zugegeben und mit einem Ölbad auf 60°C aufgeheizt. Eine Lösung von 90mg V-65 (2,2'Azobis(2,4-Dimethylvaleronitril), Fa. Wako) in 1ml Aceton wird nach Erreichen der Temperatur zugegeben. Die Reaktionszeit beträgt 6h. Das Reaktionsgemisch wird in Wasser gefällt, das Polymer abfiltriert, mit Ethanol gewaschen und im Vakuum getrocknet.

Das resultierende Polymer weist eine relative Viskosität von 1,5 auf. Die Molmasse Mw wurde zu 47.000g/mol mit einem PDI von 1,1 bestimmt. Die Zusammensetzung entsprach mit 5,3mol% Methoxyethylacrylat, 4,5mol% Methylacrylat und 90,2mol% Acrylnitril nahezu den feed-Werten.

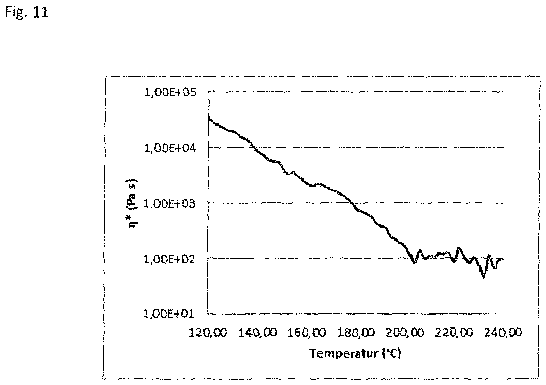

Die rheologische Messung im Oszillationsmodus (Temperatursweep) ist in Fig. 11 dargestellt.

Es ist kein Anstieg der komplexen Viskosität bei Temperaturen oberhalb 230°C zu verzeichnen.

Das Polymer wurde im Mini-Haake bei 190°C mit einer maximalen Abzugsgeschwindigkeit von 98m/min zu einem Monofilament versponnen. Der Titer der Faser betrug 2,4tex, die Festigkeit 15,0cN/tex, die Bruchdehnung 13,8%.

## Patentansprüche

1. Schmelzspinnbares Copolymer von Polyacrylnitril (PAN) herstellbar durch eine Copolymerisation von 95 bis 80 mol-% Acrylnitril mit mindestens einem Comonomer ausgewählt aus
a) 5 bis 20 mol-% mindestens eines Alkoxyalkylacrylats der allgemeinen Formel I, 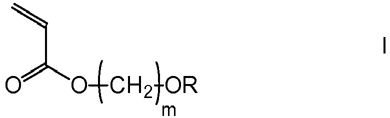 mit
R = CₙH₂ₙ₊₁ und n = 1-8 und m = 1-8, insbesondere n=1-4 und m=1-4
b) 0 bis 10 mol-% mindestens eines Alkylacrylats der allgemeinen Formel II 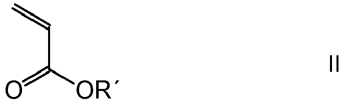 mit
R = CₙH₂ₙ₊₁ und n = 1-18,
c) 0 bis 10 mol-% mindestens eines Vinylesters der allgemeinen Formel III 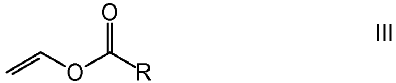 mit
R = CₙH₂ₙ₊₁ und n = 1-18,
wobei das Copolymer eine gewichtsmittlere molare Masse (Mw) im Bereich von 10.000 bis 150.000 g/mol aufweist.

2. Copolymer nach Anspruch 1,
**dadurch gekennzeichnet, dass** das Copolymer im Temperaturbereich von 160 bis 240 °C, insbesondere von 180 bis 220°C, verspinnbar ist.

3. Copolymer nach einem der vorhergehenden Ansprüche,
**dadurch gekennzeichnet, dass** das Copolymer eine mit steigender Temperatur bis 240 °C, insbesondere bis 260 °C konstante oder sinkende Schmelzeviskosität aufweist.

4. Copolymer nach einem der vorhergehenden Ansprüche,
**dadurch gekennzeichnet, dass** die Copolymerisation durch eine Fällungspolymerisation in wässrigem Medium, eine Emulsionspolymerisation in wässrigem Medium und/oder eine Polymerisation in einem Lösungsmittel erfolgt.

5. Copolymer nach dem vorhergehenden Anspruch,
**dadurch gekennzeichnet, dass** das Lösungsmittel ausgewählt ist aus der Gruppe bestehend aus Dimethylsulfoxid, Dimethylformamid, Dimethylacetamid, N-Methylpyrrolidon, Ethylencarbonat, Propylencarbonat, wässrige Natriumrhodanid-Lösung und Mischungen hiervon.

6. Copolymer nach einem der vorhergehenden Ansprüche,
**dadurch gekennzeichnet, dass** 8 bis 12 mol-% des Comonomers in a) vorliegen.

7. Copolymer nach einem der vorhergehenden Ansprüche,
**dadurch gekennzeichnet, dass** 1 bis 5 mol-% des Comonomers in b) vorliegen.

8. Copolymer nach einem der vorhergehenden Ansprüche,
**dadurch gekennzeichnet, dass** 1 bis 5 mol-% des Comonomers in c) vorliegen.

9. Copolymer nach einem der vorhergehenden Ansprüche,
**dadurch gekennzeichnet, dass** das Copolymer eine gewichtsmittlere molare Masse (Mw) im Bereich von 15.000 bis 80.000 g/mol aufweist.

10. Verfahren zur Herstellung von Fasern oder Faserprecursoren mittels Schmelzspinnen, bei dem
i. eine Copolymerisation von 95 bis 80 mol-% Acrylnitril mit mindestens einem Comonomer ausgewählt aus
a) 5 bis 20 mol-% mindestens eines Alkoxyalkylacrylats der allgemeinen Formel I, 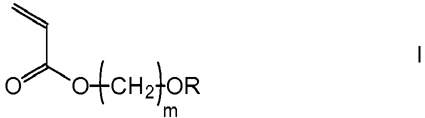 mit
R = CₙH₂ₙ₊₁ und n = 1-8 und m = 1-8, insbesondere n=1-4 und m=1-4
b) 0 bis 10 mol-% mindestens eines Alkylacrylats der allgemeinen Formel II 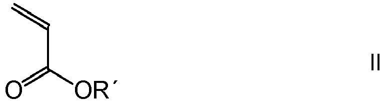 mit
R = CₙH₂ₙ₊₁ und n = 1-18,
c) 0 bis 10 mol-% mindestens eines Vinylester der allgemeinen Formel III 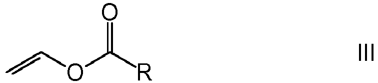 mit
R = CₙH₂ₙ₊₁ und n = 1-18,
in Gegenwart mindestens eines Initiators durchgeführt wird,
ii. das Copolymer mit einem Extruder mit mindestens einer für das Verspinnen geeigneten Düse am Extruderausgang zu Mono- oder Multi-Filamenten versponnen wird.

11. Verfahren nach Anspruch 10,
**dadurch gekennzeichnet, dass** unmittelbar vor oder bei der Extrusion in b) mindestens ein Weichmacher zugesetzt wird, der insbesondere ausgewählt ist aus der Gruppe bestehend aus Wasser, Nitroalkanen, Alkylalkoholen, ionischen Flüssigkeiten, Glykolen, Dimethylsulfoxid, Dimethylformamid, Dimethylacetamid, N-Methylpyrrolidon, Ethylencarbonat, Propylencarbonat, wässrige Natriumrhodanid-Lösung und Mischungen hiervon.

12. Verfahren nach einem der Ansprüche 10 oder 11,
**dadurch gekennzeichnet, dass** die Fasern Carbonfasern sind, wobei in weiteren Schritten
iii. eine Stabilisierung der Filamente durch eine Temperaturbehandlung bei Temperaturen von 200 bis 350 °C und
iv. eine Carbonisierung der Filamente bei Temperaturen von 800 bis 1200 °C erfolgt.

13. Verfahren nach Anspruch 12,
**dadurch gekennzeichnet, dass** die Stabilisierung der Filamente bei Temperaturen von 180 bis 320 °C, bevorzugt von 180 bis 300°C, besonders bevorzugt von 180 bis 250°C erfolgt.

14. Verfahren nach einem der Ansprüche 10 bis 13,
**dadurch gekennzeichnet, dass** der Initiator ausgewählt ist aus der Gruppe bestehend aus Azoverbindungen, Peroxiden, Hydroperoxiden, Alkylperoxiden, Peroxodicarbonaten, Peroxyestern, Dialkylperoxiden, Persulfaten, Perphosphaten, Redoxinitiatoren und Mischungen hiervon.

15. Faser herstellbar durch ein Verspinnen des Copolymers nach einem der Ansprüche 1 bis 10.

16. Faser nach dem vorhergehenden Anspruch,
**dadurch gekennzeichnet, dass** die Faser eine Carbonfaser ist.

## Claims

1. Melt spinnable copolymer of polyacrylonitrile (PAN), which is producible by copolymerisation of 95 to 80% by mol of acrylonitrile with at least one comonomer, selected from
a) 5 to 20% by mol of at least one alkoxyalkylacrylate of general formula I 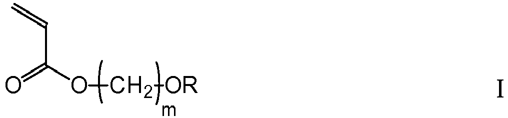 with
R = CₙH₂ₙ₊₁ and n = 1 - 8 and m = 1 - 8, in particular n = 1 - 4 and m = 1 - 4
b) 0 to 10% by mol of at least one alkylacrylate of general formula II 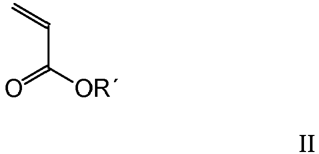 with
R = CₙH₂ₙ₊₁ and n = 1 - 18,
c) 0 to 10% by mol of at least one vinyl ester of general formula III 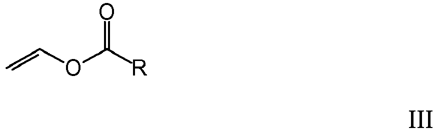 with
R = CₙH₂ₙ₊₁ and n = 1 - 18,
the copolymer having a weight-average molar mass (Mw) in the range of 10,000 to 150,000 g/mol.

2. Copolymer according to claim 1,
**characterised in that** the copolymer is spinnable in the temperature range from 160 to 240°C, in particular from 180 to 220°C.

3. Copolymer according to one of the preceding claims,
**characterised in that** the copolymer has a melt viscosity which is constant or decreasing with increasing temperature up to 240°C, in particular up to 260°C.

4. Copolymer according to one of the preceding claims,
**characterised in that** the copolymerisation is effected by precipitation polymerisation in an aqueous medium, emulsion polymerisation in an aqueous medium and/or polymerisation in a solvent.

5. Copolymer according to the preceding claim,
**characterised in that** the solvent is selected from the group consisting of dimethylsulphoxide, dimethylformamide, dimethylacetamide, N-methylpyrrolidone, ethylene carbonate, propylene carbonate, aqueous sodium rhodanide solution and mixtures hereof.

6. Copolymer according to one of the preceding claims,
**characterised in that** 8 to 12% by mol of the comonomer is present in a).

7. Copolymer according to one of the preceding claims,
**characterised in that** 1 to 5% by mol of the comonomer is present in b).

8. Copolymer according to one of the preceding claims,
**characterised in that** 1 to 5% by mol of the comonomer is present in c).

9. Copolymer according to one of the preceding claims,
**characterised in that** the copolymer has a weight-average molar mass (Mw) in the range from 15,000 to 80,000 g/mol.

10. Method for the production of fibres or fibre precursors by means of melt spinning, in which
i. a copolymerisation of 95 to 80% by mol of acrylonitrile with at least one comonomer selected from
a) 5 to 20% by mol of at least one alkoxyalkylacrylate of general formula I 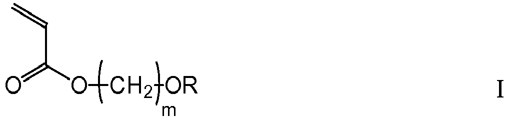 with
R = CₙH₂ₙ₊₁ and n = 1 - 8 and m = 1 - 8, in particular n = 1 - 4 and m = 1 - 4
b) 0 to 10% by mol of at least one alkylacrylate of general formula II 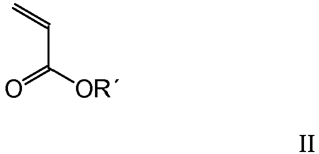 with
R = CₙH₂ₙ₊₁ and n = 1 - 18,
c) 0 to 10% by mol of at least one vinyl ester of general formula III 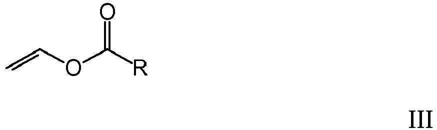 with
R = CₙH₂ₙ₊₁ and n = 1 - 18,
is carried out in the presence of at least one initiator,
ii. the copolymer is spun with an extruder with at least one nozzle, suitable for spinning, at the extruder outlet, to form mono- or multifilaments.

11. Method according to claim 10,
**characterised in that**, directly before or during extrusion in b), at least one softening agent is added, which is selected in particular from the group consisting of water, nitroalkanes, alkylalcohols, ionic liquids, glycols, dimethylsulphoxide, dimethylformamide, dimethylacetamide, N-methylpyrrolidone, ethylene carbonate, propylene carbonate, aqueous sodium rhodanide solution and mixtures hereof.

12. Method according to one of the claims 10 or 11,
**characterised in that** the fibres are carbon fibres, there being effected in further steps:
iii. stabilisation of the filaments by a temperature treatment at temperatures from 200 to 350°C and
iv. carbonisation of the filaments at temperatures from 800 to 1,200°C.

13. Method according to claim 12,
**characterised in that** stabilisation of the filaments is effected at temperatures from 180 to 320°C, preferably from 180 to 300°C, particularly preferably from 180 to 250°C.

14. Method according to one of the claims 10 to 13,
**characterised in that** the initiator is selected from the group consisting of azo compounds, peroxides, hydroperoxides, alkylperoxides, peroxodicarbonates, peroxyesters, dialkylperoxides, persulphates, perphosphates, redox initiators and mixtures hereof.

15. Fibre producible by spinning the copolymer according to one of the claims 1 to 10.

16. Fibre according to the preceding claim,
**characterised in that** the fibre is a carbon fibre.

## Revendications

1. Copolymère de polyacrylonitrile (PAN) pouvant être filé par fusion, pouvant être fabriqué par une copolymérisation de 95 à 80 % en moles d'acrylonitrile avec au moins un comonomère choisi parmi
a) 5 à 20 % en moles d'au moins un acrylate d'alcoxyalkyle de formule générale I 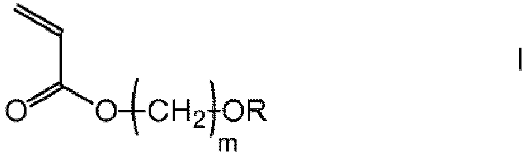 dans laquelle
R = CₙH₂ₙ₊₁ et n = 2 à 8 et m = 1 à 8, en particulier n = 1 à 4 et m = 1 à 4,
b) 0 à 10 % en moles d'au moins un acrylate d'alkyle de formule générale II 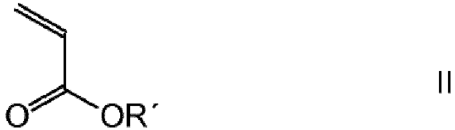 dans laquelle
R = CₙH₂ₙ₊₁ et n = 1 à 18,
c) 0 à 10 % en moles d'au moins un ester vinylique de formule générale III 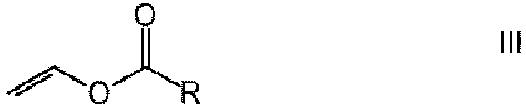 dans laquelle
R = CₙH₂ₙ₊₁ et n = 1 à 18,
le copolymère présentant une masse moléculaire moyenne en masse (Mw) comprise dans la plage de 10 000 à 150 000 g/mol.

2. Copolymère selon la revendication 1, **caractérisé en ce que** le copolymère peut être filé dans la plage de températures de 160 à 240 °C, en particulier de 180 à 220 °C.

3. Copolymère selon l'une des revendications précédentes, **caractérisé en ce que** le copolymère présente une viscosité à l'état fondu constante ou décroissante quand la température s'élève jusqu'à 240 °C, en particulier jusqu'à 260 °C.

4. Copolymère selon l'une des revendications précédentes, **caractérisé en ce que** la copolymérisation est réalisée par une polymérisation par précipitation en milieu aqueux, polymérisation en émulsion en milieu aqueux et/ou polymérisation dans un solvant.

5. Copolymère selon la revendication précédente, **caractérisé en ce que** le solvant est choisi dans le groupe consistant en le diméthylsulfoxyde, le diméthylformamide, le diméthylacétamide, la N-méthylpyrrolidone, le carbonate d'éthylène, le carbonate de propylène, une solution aqueuse de thiocyanate de sodium et les mélanges de ceux-ci.

6. Copolymère selon l'une des revendications précédentes, **caractérisé en ce que** 8 à 12 % en moles du comonomère sont présents dans a).

7. Copolymère selon l'une des revendications précédentes, **caractérisé en ce que** 1 à 5 % en moles du comonomère sont présents dans b).

8. Copolymère selon l'une des revendications précédentes, **caractérisé en ce que** 1 à 5 % en moles du comonomère sont présents dans c).

9. Copolymère selon l'une des revendications précédentes, **caractérisé en ce que** le copolymère présente une masse moléculaire moyenne en masse (Mw) comprise dans la plage de 15 000 à 80 000 g/mol.

10. Procédé de fabrication de fibres ou de précurseurs de fibres par filage par fusion, dans lequel
i. on met en oeuvre en présence d'au moins un amorceur une copolymérisation de 95 à 80 % en moles d'acrylonitrile avec au moins un comonomère choisi parmi
a) 5 à 20 % en moles d'au moins un acrylate d'alcoxyalkyle de formule générale I 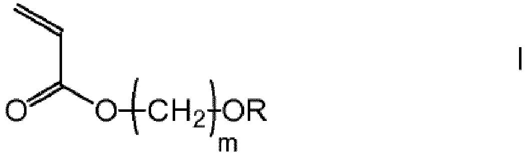 dans laquelle
R = CₙH₂ₙ₊₁ et n = 2 à 8 et m = 1 à 8, en particulier n = 1 à 4 et m = 1 à 4,
b) 0 à 10 % en moles d'au moins un acrylate d'alkyle de formule générale II 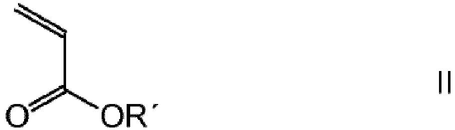 dans laquelle
R = CₙH₂ₙ₊₁ et n = 1 à 18,
c) 0 à 10 % en moles d'au moins un ester vinylique de formule générale III 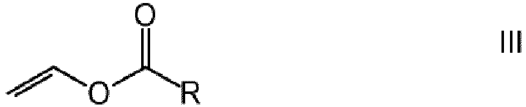 dans laquelle
R = CₙH₂ₙ₊₁ et n = 1 à 18,
ii. on file le copolymère à l'aide d'une extrudeuse comportant en sortie de l'extrudeuse au moins une buse convenant au filage, ou pour obtenir des mono-ou des multi-filaments.

11. Procédé selon la revendication 10, **caractérisé en ce que**, immédiatement avant ou lors de l'extrusion dans b), on ajoute au moins un plastifiant, qui en particulier est choisi dans le groupe consistant en l'eau, les nitroalcanes, les alcools alkyliques, les liquides ioniques, les glycols, le diméthylsulfoxyde, le diméthylformamide, le diméthylacétamide, la N-méthylpyrrolidone, le carbonate d'éthylène, le carbonate de propylène, une solution aqueuse de thiocyanate de sodium, et les mélanges de ceux-ci.

12. Procédé selon l'une des revendications 10 ou 11, **caractérisé en ce que** les fibres sont des fibres de carbone, et, dans des étapes supplémentaires,
iii. on procède à une stabilisation des filaments par un traitement à haute température, à des températures de 200 à 350 °C, et
iv. on procède à une carbonisation des filaments à des températures de 800 à 1200 °C.

13. Procédé selon la revendication 12, **caractérisé en ce que** la stabilisation des filaments est réalisée à des températures de 180 à 320 °C, de préférence de 180 à 300 °C, d'une manière particulièrement préférée de 180 à 250 °C.

14. Procédé selon l'une des revendications 10 à 13, **caractérisé en ce que** l'amorceur est choisi dans le groupe consistant en les composés azoïques, les peroxydes, les hydroperoxydes, les peroxydes d'alkyle, les peroxodicarbonates, les peroxyesters, les peroxydes de dialkyle, les persulfates, les perphosphates, les amorceurs rédox et les mélanges de ceux-ci.

15. Fibre pouvant être fabriquée par un filage du copolymère selon l'une des revendications 1 à 10.

16. Procédé selon la revendication précédente, **caractérisé en ce que** la fibre est une fibre de carbone.
